# EUROPÄISCHE PATENTSCHRIFT

(11) **EP 2 189 767 B1**
(45) Veröffentlichungstag und Bekanntmachung des Hinweises auf die Patenterteilung: **27.03.2013**
(21) Anmeldenummer: 09173929.2
(22) Anmeldetag: 23.10.2009
(51) Int. Cl.: G01J 1/16, G01J 1/18, G01J 1/32, G01J 1/42, H05B 37/02

(54) **Automatische Nachkalibrierung von Helligkeitssensoren in Gebäuden**
Automatic calibration of brightness sensors in buildings
Calibrage ultérieur automatique de capteurs de clarté dans des bâtiments

(30) Priorität: 25.11.2008 DE 102008058829
(43) Veröffentlichungstag der Anmeldung: 26.05.2010
(73) Patentinhaber: Siemens Aktiengesellschaft, 80333 München (DE)
(72) Erfinder: Ferstl, Peter, 93053 Regensburg (DE)

(56) Entgegenhaltungen:
- EP-A1- 1 289 345
- EP-A2- 1 610 197
- DE-A1-102005 012 148
- RUBINSTEIN F ET AL: "IMPROVING THE PERFORMANCE OF PHOTO-ELECTRICALLY CONTROLLED LIGHTING SYSTEMS" JOURNAL OF THE ILLUMINATING ENGINEERING SOCIETY, ILLUMINATING ENGINEERING SOCIETY. NEW YORK, US, Bd. 18, Nr. 1, 1. Dezember 1989 (1989-12-01), Seiten 70-94, XP000263865 ISSN: 0099-4480

## Beschreibung

Die vorliegende Erfindung betrifft ein Verfahren und eine Vorrichtung zum automatischen Kalibrieren von wenigstens einem Innenhelligkeitssensor für zumindest ein Leuchtmittel in einem Raum eines Gebäudes, wobei der Raum wenigstens eine lichtdurchlässige Öffnung aufweist, durch die Sonnenlichtstrahlen in den Raum eindringen können.

Bei der Beleuchtungssteuerung in Gebäuden wird in vielen Fällen die Helligkeit im Raum erfasst. Abhängig von dieser Helligkeit wird die Beleuchtung gedimmt oder teilweise geschaltet. Für die Qualität der Steuerung oder Regelung ist es wichtig, dass die Helligkeit immer möglichst genau erfasst wird. Dadurch wird es möglich mit geringem Kunstlichteinsatz und entsprechend wenig Energieverbrauch die gewünschte Helligkeit innerhalb eines Raumes eines Gebäudes darzustellen. Üblicherweise wird die Helligkeit durch Sensoren, sogenannte Innenhelligkeitssensoren, an der Decke eines Raumes über reflektiertes Licht bestimmt. Aufgrund dieses indirekten Verfahrens ist eine Nachkalibrierung dieser sogenannten Innenhelligkeitssensoren nötig. Diese Nachkalibrierung ist jedoch sehr zeitaufwändig. Im Laufe der Nutzung des Gebäudes bzw. der Räume innerhalb des Gebäudes können sich allerdings in den Räumen die sogenannten Licht-Faktoren ändern, die eine Nachkalibrierung erforderlich machen. Dies sind z.B. andere Möbel oder Böden, die andere Reflexionsgrade aufweisen, als die Möbel oder Böden, die ursprünglich in dem Raum vorhanden waren. Ferner kann der Innenhelligkeitssensor verschmutzen oder altern. Dies führt zu einer schleichenden Verschlechterung der Beleuchtungssteuerung, was eine Nachkalibrierung erforderlich macht. In vielen Fällen erfolgt diese Nachkalibrierung aber nicht, da dem Betreiber das Problem nicht bewusst ist oder er den Aufwand für zu hoch hält.

Heutzutage erfolgt eine Nachkalibrierung, wie eine Erstkalibrierung bei der Inbetriebnahme, d.h. manuell durch einen Techniker.

Aus der EP 1610197 A2 ist ein Verfahren und System zum Regeln der Helligkeit in einem mit Innenlicht und Außenlicht beleuchteten Raum bekannt, bei dem zusätzlich zu einem Innensensor zum Erfassen der in dem Raum vorliegenden Helligkeit zusätzlich ein Außensensor zum Erfassen des Außenlichts vorgesehen ist und bei dem das Regelverhalten für eine Lichtquelle im Raum von dem Mess-Signal des Außensensors abhängig ist.

Aus der EP 1289345 A1 ist ein Verfahren und eine Einrichtung zum Steuern der Helligkeit in einem mit Innenlicht und Außenlicht beleuchteten Raum bekannt, bei dem ein Helligkeitssollwert für eine innerhalb eines Raumes angeordnete Beleuchtungsanlage in Abhängigkeit von der richtungsabhängigen Außenlicht-Intensität erzeugt wird. Zum Ermitteln der richtungsabhängigen Außenlicht-Intensität wird die durch Bewölkung verursachte Dämpfung der Sonnendirekteinstrahlung bestimmt und in Abhängigkeit von dieser Dämpfung die richtungsabhängige gedämpfte Direktstrahlung und die richtungsunabhängige Streustrahlung ermittelt.

Aufgabe der Erfindung ist es, ein Verfahren und eine Vorrichtung zu schaffen, durch die eine einfache und kostengünstige automatische Nachkalibrierung eines Innenhelligkeitssensors innerhalb eines Raumes eines Gebäudes ermöglicht wird.

Diese Aufgabe wird erfindungsgemäß durch ein Verfahren zum automatischen Nachkalibrierung von wenigstens einem Innenhelligkeitssensor mit den Merkmalen gemäß dem unabhängigen Patentanspruch 1 sowie durch eine Vorrichtung zum automatischen Kalibrieren von wenigstens einem Innenhelligkeitssensor mit den Merkmalen gemäß dem unabhängigen Patentanspruch 5 gelöst. Weitere Merkmale und Details der Erfindung ergeben sich aus den Unteransprüchen, der Beschreibung sowie den Zeichnun gen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung, und jeweils umgekehrt, so dass bezüglich der Offenbarung zu den einzelnen Erfindungsaspekten stets wechselseitig Bezug genommen wird.

Gemäß dem ersten Aspekt der Erfindung wird die Aufgabe durch ein Verfahren zum automatischen Nachkalibrierung von wenigstens einem Innenhelligkeitssensor in einem Raum eines Gebäudes, wobei der Raum wenigstens eine lichtdurchlässige Öffnung aufweist, durch die Sonnenlicht in den Raum eindringen kann, gelöst, wobei das Verfahren durch folgende Schritte gekennzeichnet ist:
- zu bestimmbaren Zeitpunkten werden durch wenigstens einen Außenhelligkeitssensor die Außenhelligkeit außerhalb des Raumes ermittelt und der jeweilige Sonnenstand berechnet,
- zu denselben Zeitpunkten wird die Innenhelligkeit in dem Raum durch wenigstens ein Messgerät innerhalb des Raumes ermittelt,
- die ermittelten Helligkeitswerte sowie der berechnete Sonfür jeden Zeitpunkt werden in einer dem wenigstens einen Innenhelligkeitssensor zugeordneten Speichereinheit als Referenzwerte gespeichert,
- die Außenhelligkeit außerhalb des Raumes, der jeweilige Sonnenstand und die Innenhelligkeit innerhalb des Raumes werden wiederholt ermittelt und die ermittelten Werte in einer Vergleichseinheit mit den gespeicherten Referenzwerten verglichen,
- stellt die Vergleichseinheit fest, dass ein ermittelter Außenhelligkeitswert und der zeitgleich ermittelte Sonnenstand mit Referenzwerten eines bestimmten Zeitpunktes übereinstimmen, wird der wenigstens eine Innenhelligkeitssensor durch eine dem wenigstens einen Innenhelligkeitssensor zugeordnete Kalibrierungseinheit auf den Innenhelligkeitswert des Referenzwertes des bestimmten Zeitpunktes nachkalibriert.

Kern der Erfindung ist, dass von der Außenhelligkeit und dem Sonnenstand auf die Innenhelligkeit in einem Raum eines Gebäudes geschlossen wird.
Es werden geeignete Zeitpunkte gewählt, zu denen die Außenhelligkeit außerhalb des betreffenden Raumes, der Sonnenstand und die Innenhelligkeit innerhalb des Raumes gemessen bzw. berechnet werden. Hinterlegt man diese Werte im System, d.h. in der Speichereinheit der Vorrichtung, dann kann sobald diese Konstellation wieder eintritt, der Innenhelligkeitssensor nachkalibriert werden. Dieses Nachkalibrieren muss nicht immer erfolgen, sondern kann einige Male im Jahr oder auf Anforderung nach einer Änderung erfolgen. Vorteilhaft ist dabei, dass die Nachkalibrierung automatisch erfolgen kann, da die Referenzwerte der Helligkeiten und des Sonnenstandes in der Speichereinheit der Vorrichtung hinterlegt sind. Idealerweise verbindet man dieses Hinterlegen der Referenzwerte mit der Erstkalibrierung bei der Inbetriebnahme der Vorrichtung.

Zu bestimmbaren Zeitpunkten wird durch wenigstens einen Außenhelligkeitssensor die Außenhelligkeit außerhalb des Raumes und durch eine Rechnereinheit der jeweilige Sonnenstand ermittelt. Zu denselben Zeitpunkten wird die Innenhelligkeit in dem Raum durch wenigstens ein Messgerät innerhalb des Raumes ermittelt. Eine erste Messung kann vorteilhafterweise direkt bei der Inbetriebnahme der Vorrichtung und der damit verbundenen Ausgangskalibrierung des Innenhelligkeitssensors erfolgen. Es werden jedoch bevorzugt über ein komplettes Jahr verteilt Messungen der Helligkeiten innerhalb und außerhalb des Raumes sowie Berechnungen des Sonnenstandes durchgeführt. Zu jedem Messzeitpunkt werden die Messwerte und die berechneten Werte in einer dem Innenhelligkeitssensor zugeordneten Speichereinheit als Referenzwerte gespeichert. Hierdurch liegen in der Speichereinheit für verschiedene Jahres- und Tageszeiten Referenzwerte der Außenhelligkeit, des Sonnenstandes und der Innenhelligkeit vor, auf die zur Nachkalibrierung zurückgegriffen werden kann.

Zur Nachkalibrierung des wenigstens einen Innenhelligkeitssensors wird wiederholt die Außenhelligkeit außerhalb des Raumes, der jeweilige Sonnenstand und die Innenhelligkeit innerhalb des Raumes ermittelt. Die aktuell ermittelten Werte werden in einer Vergleichseinheit mit den gespeicherten Referenzwerten verglichen. Wird in der Vergleichseinheit festgestellt, dass ein ermittelter Außenhelligkeitswert einer aktuellen Messung und der zeitgleich berechnete Sonnenstand mit Referenzwerten eines bestimmten Zeitpunktes übereinstimmen, d.h. der Außenhelligkeitswert und der Sonnenstand der aktuellen Messung bzw. Berechnung entsprechen dem Außenhelligkeitswert und dem Sonnenstand zu einem früheren Zeitpunkt, so wird der wenigstens eine Innenhelligkeitssensor nachkalibriert, wenn der Innenhelligkeitswert der früheren Messung anders ist, als der aktuell ermittelte Innenhelligkeitswert. So kann der wenigstens eine Innenhelligkeitssensor durch eine dem wenigstens einen Innenhelligkeitssensor zugeordnete Kalibrierungseinheit auf den Innenhelligkeitswert des Referenzwertes des bestimmten Zeitpunktes, bei dem die Außenhelligkeit und der Sonnenstand mit dem aktuell gemessenen Außenhelligkeitswert und dem aktuellen Sonnenstand übereinstimmt, nachkalibriert werden. Die Erstkalibrierung und die Nachkalibrierung des wenigstens einen Innenhelligkeitssensors erfolgt jeweils bei ausgeschaltetem Kunstlicht.

Bei dem Verfahren wird die Abhängigkeit der Innenhelligkeit von der Außenhelligkeit und dem Sonnenstand ausgenutzt, um den oder die Innenhelligkeitssensor(en) nachzukalibrieren. Dabei wird auf eine komplexe und zum Teil ungenaue Berechnung verzichtet. Es werden nur die Randbedingungen, d.h. die Außenhelligkeit und der Sonnenstand, festgehalten und diese konkreten Werte gemessen. Bei Wiedereintritt dieser Randbedingungen kann/können der/die Innenhelligkeitssensor(en) automatisch nachkalibriert werden. Damit arbeitet die Lichtregelung oder -steuerung immer präzise und effektiv ohne eine zusätzliche manuelle Nachkalibrierung. Dies spart Energie- und Wartungskosten bei optimaler Beleuchtung.

Durch das Verfahren kann ein Innenhelligkeitssensor, aber es können auch mehrere Innenhelligkeitssensoren in einem Raum gleichzeitig nachkalibriert werden. So können für jeden Innenhelligkeitssensor zu verschiedenen Jahres- und Tageszeiten Referenzhelligkeitswerte in der Speichereinheit gespeichert werden. Dabei können die Innenhelligkeitswerte, d.h. die Referenzwerte, für jeden Innenhelligkeitssensor unterschiedlich sein. Bei Feststellung einer Übereinstimmung der Außenhelligkeit und des Sonnenstandes wird jeder einzelne Innenhelligkeitssensor entsprechend seinem Referenzwert für die Innenhelligkeit nachkalibriert. Die Nachkalibrierung ist somit unabhängig von den Randbedingungen innerhalb des Raumes, sondern nur von den Randbedingungen außerhalb des Raumes. D.h., verändert sich beispielsweise die Inneneinrichtung des Raumes, beispielsweise der Bodenbelag oder die Möbel, kann es vorkommen, dass die Helligkeit der Beleuchtung des Raumes erhöht oder reduziert wird, obwohl dies gar nicht erforderlich ist. Wird beispielsweise ein Laminatboden durch einen Teppichboden ersetzt, so wird entsprechend weniger Licht von dem Teppichboden reflektiert, so dass der Innenhelligkeitssensor dem Leuchtmittel mitteilt, mehr Helligkeit abzugeben. Da dies aber gar nicht erforderlich ist, wird der Energieverbrauch unnötig in die Höhe getrieben. Gemäß dem erfindungsgemäßen Verfahren bleibt die Innenhelligkeit bei veränderten Licht-Faktoren immer gleich, da die Innenhelligkeitssensoren lediglich durch die Randbedingungen außerhalb des Raumes, d.h. die Außenhelligkeit und den Sonnenstand, beeinflusst werden.

Im Lichte der Erfindung wird als lichtdurchlässige Öffnung jeder mögliche Zugang zu dem Raum betrachtet, durch den Lichtstrahlen, insbesondere Sonnenlicht, von außen in den Raum eindringen können. In der Regel handelt es sich hierbei um Fenster oder Türen aus durchsichtigem Kunststoff oder Glas. Es können aber auch offene Lichtschächte gemeint sein. Bei der Messung der Außenhelligkeit wird die Helligkeit in unmittelbarer Umgebung des Raumes bzw. des Gebäudes betrachtet. Dabei wird bevorzugt die Außenhelligkeit direkt vor der lichtdurchlässigen Öffnung, insbesondere dem Fenster, ermittelt. Die Position des Außenhelligkeitssensors zur Messung der Außenhelligkeit bleibt immer unverändert.

Die Nachkalibrierung kann wahlweise automatisch ablaufen oder manuell gestartet werden.

Bevorzugt ist ferner ein Verfahren, bei dem zumindest zwei Außenhelligkeitssensoren verschiedene Außenhelligkeiten außerhalb des Raumes zu einem bestimmbaren Zeitpunkt ermitteln und als Referenzwerte in der Speichereinheit speichern und bei dem die zumindest zwei Außenhelligkeitssensoren wiederholt die verschiedenen Außenhelligkeiten ermitteln, um diese in der Vergleichseinheit mit den gespeicherten Referenzwerten zu vergleichen. D.h., die Außenhelligkeit kann an verschiedenen Außenstellen parallel ermittelt werden. Durch die Mehrzahl an Messwerten werden präzisieren Daten erhalten, die als Grundlage der Nachkalibrierung dienen. So kann beispielsweise ein Raum an verschiedenen Seiten Fenster aufweisen, durch die Sonnenlicht in den Raum eindringt. An jeder Fassade und evtl. in verschiedenen Höhen kann außerhalb des Raumes jeweils ein Außenhelligkeitssensor installiert werden und die entsprechenden Außenhelligkeiten können ermittelt werden. Des Weiteren wird der Sonnenstand zu bestimmbaren Zeitpunkten zeitgleich mit den Außenhelligkeiten berechnet. Die Mehrzahl an Außenhelligkeitswerten spiegelt die Außenbedingungen nochmals verbessert wieder, so dass diese präzisere Referenzwerte bilden. Bei Eintritt derselben Außenbedingungen, kann die Nachkalibrierung des Innenhelligkeitssensors besser präzisiert werden.

Bevorzugt ist es ferner, wenn die Nachkalibrierung für mehrere Innenhelligkeitssensoren gleichzeitig erfolgt.

Gemäß des zweiten Aspektes der Erfindung wird die Aufgabe durch eine Vorrichtung zum automatischen Nachkalibrieren von wenigstens einem Innenhelligkeitssensor für zumindest ein Leuchtmittel in einem Raum eines Gebäudes, wobei der Raum wenigstens eine lichtdurchlässige Öffnung aufweist, durch die Sonnenlicht in den Raum eindringen kann, gelöst, wobei die Vorrichtung dadurch gekennzeichnet ist, dass die Vorrichtung wenigstens einen Außenhelligkeitssensor zur Ermittlung der Außenhelligkeit außerhalb des Raumes und eine Rechnereinheit zur Berechnung des Sonnenstandes zu bestimmbaren Zeitpunkten aufweist, dass die Vorrichtung wenigstens einen Innenhelligkeitssensor und wenigstens ein Messgerät zur Ermittlung der Innenhelligkeit in dem Raum aufweist, dass die Vorrichtung eine Speichereinheit zur Speicherung der ermittelten Helligkeitswerte sowie des erfassten Sonnenstandes für jeden Zeitpunkt als Referenzwerte aufweist, dass die Vorrichtung eine Vergleichseinheit zum Vergleich von durch die Sensoren wiederholt ermittelten Helligkeitswerten und berechneten Sonnenständen mit gespeicherten Referenzwerten aufweist, und dass die Vorrichtung eine Kalibrierungseinheit aufweist, die den wenigstens einen Innenhelligkeitssensor auf einen als Referenzwert gespeicherten Innenhelligkeitswert nachkalibriert, wenn eine dem Innenhelligkeitssensor zugeordnete Vergleichseinheit feststellt, dass ein ermittelter Außenhelligkeitswert und der zeitgleich ermittelte Sonnenstand mit Referenzwerten eines bestimmten Zeitpunktes übereinstimmen.

Bevorzugt weist die Vorrichtung Mittel zur Durchführung des Verfahrens gemäß des ersten Aspektes der Erfindung auf.

Die Erfindung wird nun anhand eines Ausführungsbeispiels unter Bezugnahme auf die beiliegende Zeichnung näher erläutert. Es zeigt:

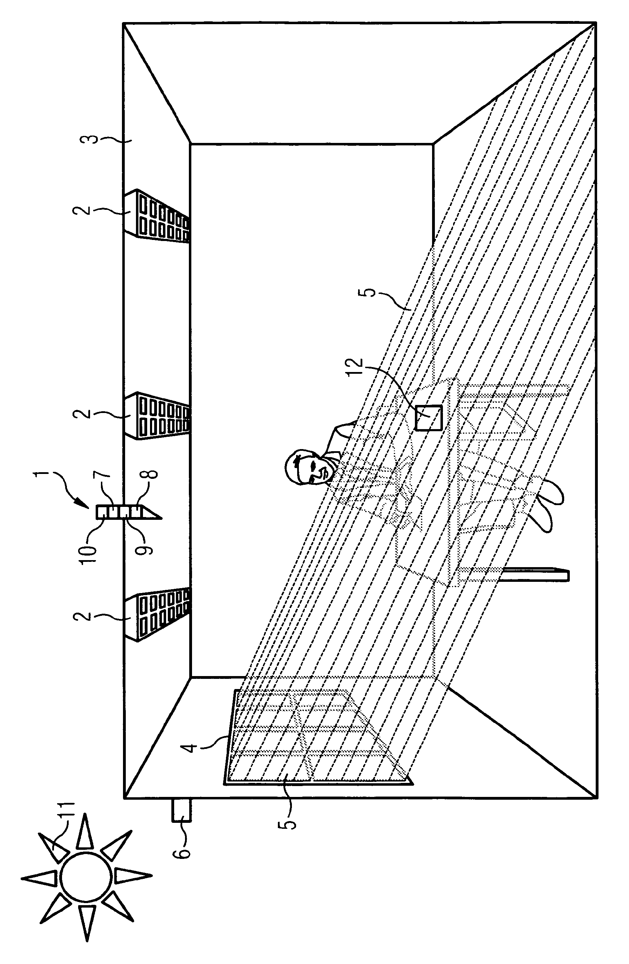

- Figur 1: eine schematische Darstellung eines Raumes eines Gebäudes mit Leuchtmitteln und einer Vorrichtung zum Nachkalibrieren des Innenhelligkeitssensors an der Decke des Raumes.

Die Fig. 1 zeigt eine schematische Darstellung eines Raumes 3 eines Gebäudes mit Leuchtmitteln 2 und einer Vorrichtung zum Nachkalibrieren des Innenhelligkeitssensors 1 an der Decke des Raumes 3. Dem Innenhelligkeitssensor 1 der Vorrichtung sind eine Speichereinheit 7, eine Vergleichseinheit 8, eine Rechnereinheit 10 zur Berechnung des Sonnenstandes der Sonne 11 und eine Kalibrierungseinheit 9 zugeordnet. Außerhalb des Raumes weist die Vorrichtung einen Außenhelligkeitssensor 6 zur Ermittlung der Außenhelligkeit auf. Durch die lichtdurchlässige Öffnung 4, hier ein Fenster, des Raumes 3 dringt Sonnenlicht 5 in den Raum 3 hinein.

Zu bestimmbaren Zeitpunkten wird durch den Außenhelligkeitssensor 6 der Vorrichtung die Außenhelligkeit außerhalb des Raumes 3 ermittelt und durch die Rechnereinheit 10 der jeweilige Sonnenstand der Sonne 11 berechnet. Faktoren zur Berechnung des Sonnenstandes sind der Ort, das Datum und die Uhrzeit. Zu denselben Zeitpunkten wird die Innenhelligkeit in dem Raum 3 durch ein Messgerät 12 innerhalb des Raumes 3 ermittelt. Die ermittelten Helligkeitswerte sowie der berechnete Sonnenstand werden für jeden Zeitpunkt in einer dem wenigstens einen Innenhelligkeitssensor 1 zugeordneten Speichereinheit 7 als Referenzwerte gespeichert. Zumindest die Außenhelligkeit außerhalb des Raumes 3 und der jeweilige Sonnenstand werden durch den Außensensor 6 bzw. die Rechnereinheit 10 wiederholt ermittelt und die ermittelten Werte werden in einer Vergleichseinheit 8 mit den gespeicherten Referenzwerten verglichen. Zusätzlich kann die Innenhelligkeit innerhalb des Raumes 3 durch den Innenhelligkeitssensor 1 gemessen werden und ebenfalls mit den gespeicherten Referenzwerten verglichen werden. Stellt die Vergleichseinheit 8 fest, dass ein ermittelter Außenhelligkeitswert und der zeitgleich berechnete Sonnenstand mit Referenzwerten eines bestimmten Zeitpunktes übereinstimmen, wird der wenigstens eine Innenhelligkeitssensor 1 durch eine dem wenigstens einen Innenhelligkeitssensor 1 zugeordnete Kalibrierungseinheit 9 auf den Innenhelligkeitswert des von dem Messgerät ermittelten Referenzwertes des bestimmten Zeitpunktes nachkalibriert. Auf diese Art und Weise werden die Leuchtmittel 2 entsprechend der Beleuchtung zu dem einen bestimmten Zeitpunkt eingestellt.

Bei dem Verfahren bzw. durch die Vorrichtung wird die Abhängigkeit der Innenhelligkeit von der Außenhelligkeit und dem Sonnenstand ausgenutzt, um den Innenhelligkeitssensor 1 nachzukalibrieren. Dabei wird auf eine komplexe und zum Teil ungenaue Berechnung verzichtet. Es werden nur die Randbedingungen, d.h. die Außenhelligkeit und der Sonnenstand, ermittelt und gespeichert. Bei Wiedereintritt dieser Randbedingungen kann der Innenhelligkeitssensor 1 automatisch nachkalibriert werden. Damit arbeitet die Lichtregelung oder -steuerung immer präzise und effektiv ohne eine zusätzliche manuelle Nachkalibrierung. Dies spart Energie- und Wartungskosten bei optimaler Beleuchtung.

### Bezugszeichenliste

- 1: Innenhelligkeitssensor
- 2: Leuchtmittel
- 3: Raum eines Gebäudes
- 4: lichtdurchlässige Öffnung des Raumes
- 5: Sonnenlichtstrahlen
- 6: Außenhelligkeitssensor
- 7: Speichereinheit
- 8: Vergleichseinheit
- 9: Kalibrierungseinheit
- 10: Rechnereinheit
- 11: Sonne
- 12: Messgerät

## Patentansprüche

1. Verfahren zum automatischen Nachkalibrieren von wenigstens einem Innenhelligkeitssensor (1) in einem Raum (3) eines Gebäudes, wobei der Raum (3) wenigstens eine lichtdurchlässige Öffnung (4) aufweist, durch die Sonnenlichtstrahlen (5) in den Raum (3) eindringen können, wobei das Verfahren durch folgende Schritte gekennzeichnet ist:
- zu bestimmbaren Zeitpunkten werden durch wenigstens einen Außenhelligkeitssensor (6) die Außenhelligkeit außerhalb des Raumes (3) ermittelt und der jeweilige Sonnenstand berechnet,
- zu denselben Zeitpunkten wird die Innenhelligkeit in dem Raum (3) durch wenigstens ein Messgerät (12) innerhalb des Raumes (3) ermittelt,
- die ermittelten Helligkeitswerte sowie der berechnete Sonnenstand für jeden Zeitpunkt werden in einer dem wenigstens einen Innenhelligkeitssensor (1) zugeordneten Speichereinheit (7) als Referenzwerte gespeichert,
- die Außenhelligkeit außerhalb des Raumes (3), der jeweilige Sonnenstand und die Innenhelligkeit innerhalb des Raumes (3) werden wiederholt ermittelt und die ermittelten Werte in einer Vergleichseinheit (8) mit den gespeicherten Referenzwerten verglichen,
- stellt die Vergleichseinheit (8) fest, dass ein ermittelter Außenhelligkeitswert und der zeitgleich ermittelte Sonnenstand mit Referenzwerten eines bestimmten Zeitpunktes übereinstimmen, wird der wenigstens eine Innenhelligkeitssensor (1) durch eine dem wenigstens einen Innenhelligkeitssensor (1) zugeordnete Kalibrierungseinheit (9) auf den Innenhelligkeitswert des Referenzwertes des bestimmten Zeitpunktes nachkalibriert

2. Verfahren nach Anspruch 1, **dadurch gekennzeichnet, dass** die Nachkalibrierung manuell gestartet wird.

3. Verfahren nach Anspruch 1 oder 2, **dadurch gekennzeichnet, dass** zumindest zwei Außenhelligkeitssensoren (6) verschiedene Außenhelligkeiten außerhalb des Raumes (3) zu einem bestimmbaren Zeitpunkt ermitteln und als Referenzwerte in der Speichereinheit (7) speichern und dass die zumindest zwei Außenhelligkeitssensoren (6) wiederholt die verschiedenen Außenhelligkeiten ermitteln, um diese in der Vergleichseinheit (8) mit den gespeicherten Referenzwerten zu vergleichen.

4. Verfahren nach einem der vorhergehenden Ansprüche 1 bis 3, **dadurch gekennzeichnet, dass** die Nachkalibrierung für mehrere Innenhelligkeitssensoren gleichzeitig erfolgt.

5. Vorrichtung zum automatischen Nachkalibrieren von wenigstens einem Innenhelligkeitssensor (1) für zumindest ein Leuchtmittel (2) in einem Raum (3) eines Gebäudes, wobei der Raum (3) wenigstens eine lichtdurchlässige Öffnung (4) aufweist, durch die Sonnenlicht (5) in den Raum (3) eindringen kann, **dadurch gekennzeichnet, dass** die Vorrichtung wenigstens einen Außenhelligkeitssensor (6) zur Ermittlung der Außenhelligkeit außerhalb des Raumes (3) und eine Rechnereinheit zur Berechnung des Sonnenstandes zu bestimmbaren Zeitpunkten aufweist, dass die Vorrichtung wenigstens einen Innenhelligkeitssensor (1) und wenigstens ein Messgerät (12) zur Ermittlung der Innenhelligkeit in dem Raum (3) aufweist, dass die Vorrichtung eine Speichereinheit (7) zur Speicherung der ermittelten Helligkeitswerte des wenigstens einen Außenhelligkeitssensor (6) und des Messgerätes (12) sowie des erfassten Sonnenstandes für jeden Zeitpunkt als Referenzwerte aufweist, dass die Vorrichtung eine Vergleichseinheit (9) zum Vergleich von durch die Sensoren (1, 6) wiederholt ermittelten Helligkeitswerten und berechneten Sonnenstände mit gespeicherten Referenzwerten aufweist, und dass die Vorrichtung eine Kalibrierungseinheit (9) aufweist, die den wenigstens einen Innenhelligkeitssensor (1) auf einen als Referenzwert gespeicherten Innenhelligkeitswert nachkalibriert, wenn eine dem Innenhelligkeitssensor (1) zugeordnete Vergleichseinheit (8) feststellt, dass ein ermittelter Außenhelligkeitswert und der zeitgleich ermittelte Sonnenstand mit Referenzwerten eines bestimmten Zeitpunktes übereinstimmen.

6. Vorrichtung nach Anspruch 5, **dadurch gekennzeichnet, dass** diese Mittel zur Durchführung des Verfahrens nach einem der vorhergehenden Ansprüche 2 bis 4 aufweist.

## Claims

1. Method for automatic recalibration of at least one internal brightness sensor (1) in a room (3) of a building, wherein the room (3) has at least one transparent opening (4), through which rays of sunlight (5) can penetrate into the room (3), wherein the method is **characterised by** the following steps:
- at definable points in time the external brightness outside the room (3) is determined by at least one external brightness sensor (6) and the respective position of the sun is computed,
- at the same points in time the internal brightness in the room (3) is determined by at least one measuring device (12) inside the room (3),
- the brightness values determined as well as the computed position of the sun for each point in time are stored in a memory unit (7) assigned to the at least one internal brightness sensor (1) as reference values,
- the external brightness outside the room (3), the respective position of the sun and the internal brightness inside the room (3) are determined repeatedly and the determined values are compared in a comparator unit (8) with the stored reference values,
- if the comparator unit (8) establishes that a determined external brightness value and the position of the sun determined simultaneously match reference values of a specific point in time, the at least one internal brightness sensor (1) is recalibrated by a calibration unit (9) assigned to the at least one internal brightness sensor (1) to the internal brightness value of the reference value of the specific point in time.

2. Method according to claim 1, **characterised in that** the recalibration is started manually.

3. Method according to claim 1 or 2, **characterised in that** at least two external brightness sensors (6) determine different external brightnesses outside the room (3) at a specifiable point in time and store them as reference values in the memory unit (7) and that the at least two external brightness sensors (6) repeatedly determine the different external brightnesses in order to compare said values in the comparator unit (8) with the stored reference values.

4. Method according to one of the preceding claims 1 to 3, **characterised in that** the recalibration is undertaken simultaneously for a number of internal brightness sensors.

5. A device for automatic recalibration of at least one internal brightness sensor (1) for at least one luminaire (2) in a room (3) of a building, wherein the room (3) has at least one transparent opening (4), through which rays of sunlight (5) can penetrate into the room (3), **characterised in that** the device has at least one external brightness sensor (6) for determining the external brightness outside the room (3) and a computation unit for computing the position of the sun at specifiable points in time, that the device has at least one internal brightness sensor (1) and at least one measuring device (12) for determining the internal brightness in the room (3), that the device has a memory unit (7) for storing the determined brightness values of the at least one external brightness sensor (6) and of the measuring device (12) as well as the detected position of the sun for each point in time as reference values, that the device has a comparator unit (9) for comparison of brightness values repeatedly determined by the sensors (1, 6) and computed positions of the sun with stored reference values, and that the device has a calibration unit (9) which recalibrates the at least one internal brightness sensor (1) to an internal brightness value stored as a reference value, if a comparator unit (8) assigned to the internal brightness sensor (1) establishes that a determined external brightness value and the simultaneously determined position of the sun match reference values of a specific point in time.

6. Device according to claim 5, **characterised in that** said device has means for carrying out the method in accordance with one of the preceding claims 2 to 4.

## Revendications

1. Procédé de postcalibrage automatique d'au moins un capteur de clarté intérieure (1) dans une pièce (3) d'un bâtiment, la pièce (3) présentant au moins une ouverture (4) laissant passer la lumière et par laquelle les rayons de lumière du soleil (5) peuvent entrer dans la pièce (3), le procédé étant **caractérisé par** les étapes suivantes :
- à des instants déterminables, la clarté extérieure en dehors de la pièce (3) étant déterminée par au moins un capteur de clarté extérieure (6) et le niveau respectif du soleil étant calculé ;
- aux mêmes instants, au moins un appareil de mesure (12) détermine, dans la pièce (3), la clarté intérieure dans la pièce (3) ;
- les valeurs de clarté déterminées et le niveau du soleil calculé pour chaque instant sont stockés en tant que valeurs de référence dans une unité de mémoire (7) associée à l'au moins un capteur de clarté intérieure (1) ;
- la clarté extérieure en dehors de la pièce (3), le niveau respectif du soleil et la clarté intérieure dans la pièce (3) sont déterminés de manière répétée et les valeurs déterminées sont comparées, dans une unité de comparaison (8), avec les valeurs de référence stockées ;
- si l'unité de comparaison (8) constate qu'une valeur de clarté extérieure déterminée et le niveau du soleil déterminé en même temps coïncident avec des valeurs de référence d'un instant déterminé, l'au moins un capteur de clarté intérieure (1) est postcalibré par une unité de calibrage associée à l'au moins un capteur de clarté intérieure (1) sur la valeur de clarté intérieure de la valeur de référence de l'instant déterminé.

2. Procédé selon la revendication 1, **caractérisé en ce que** le postcalibrage est lancé manuellement.

3. Procédé selon la revendication 1 ou 2, **caractérisé en ce qu'**au moins deux capteurs de clarté extérieure (6) déterminent différentes clartés extérieures en dehors de la pièce (3) à un instant déterminable et les stockent en tant que valeurs de référence dans l'unité de mémoire (7) et **en ce que** les au moins deux capteurs de clarté extérieure (6) déterminent de manière répétée les différentes clartés extérieures pour comparer celles-ci, dans l'unité de comparaison (8), avec les valeurs de référence stockées.

4. Procédé selon l'une des revendications précédentes 1 à 3, **caractérisé en ce que** le postcalibrage s'effectue simultanément pour plusieurs capteurs de clarté intérieure.

5. Dispositif de postcalibrage automatique d'au moins un capteur de clarté intérieure (1) pour au moins un moyen d'éclairage (2) dans une pièce (3) d'un bâtiment, la pièce (3) présentant au moins une ouverture (4) laissant passer la lumière et par laquelle la lumière du soleil (5) peut entrer dans la pièce (3), **caractérisé en ce que** le dispositif comporte au moins un capteur de clarté extérieure (6) pour déterminer la clarté extérieure en dehors de la pièce (3) et une unité de calcul pour calculer le niveau du soleil à des instants déterminables, **en ce que** le dispositif comporte au moins un capteur de clarté intérieure (1) et au moins un appareil de mesure (12) pour déterminer la clarté intérieure dans la pièce (3), **en ce que** le dispositif comporte une unité de mémoire (7) pour stocker en tant que valeurs de référence les valeurs de clarté déterminées de l'au moins un capteur de clarté extérieure (6) et de l'appareil de mesure (12) ainsi que le niveau de soleil capté pour chaque instant, **en ce que** le dispositif comporte une unité de comparaison (9) pour comparer avec des valeurs de référence stockées des valeurs de clarté déterminées de manière répétée par les capteurs (1, 6) et des niveaux de soleil calculés, et **en ce que** le dispositif comporte une unité de calibrage (9) pour le postcalibrage de l'au moins un capteur de clarté intérieure (1) sur une valeur de clarté intérieure stockée en tant que valeur de référence lorsqu'une unité de comparaison (8) associée au capteur de clarté intérieure (1) constate qu'une valeur de clarté extérieure déterminée et le niveau du soleil déterminé en même temps coïncident avec des valeurs de référence d'un instant déterminé.

6. Dispositif selon la revendication 5, **caractérisé en ce qu'**il comporte des moyens pour exécuter le procédé selon l'une des revendications précédentes 2 à 4.
